# EUROPÄISCHE PATENTSCHRIFT

(11) **EP 0 433 747 B1**
(45) Veröffentlichungstag und Bekanntmachung des Hinweises auf die Patenterteilung: **03.03.1993**
(21) Anmeldenummer: 90123165.4
(22) Anmeldetag: 04.12.1990
(51) Int. Cl.: B23H 7/08, B23H 1/04

(54) **Drahtelektroden zum funkenerosiven Schneiden sowie Verfahren zu deren Herstellung**
Wire electrode for spark-erosive cutting and method for his fabrication
Fil-électrode pour la découpe par étincelage érosif et procédé pour sa fabrication

(30) Priorität: 22.12.1989 DE 3942604
(43) Veröffentlichungstag der Anmeldung: 26.06.1991
(73) Patentinhaber: Berkenhoff GmbH, D-35452 Heuchelheim (DE)
(72) Erfinder: Groos, Heinrich, W-6348 Herborn (DE)
(74) Vertreter: Missling, Arne, Dipl.-Ing.

(56) Entgegenhaltungen:
- DE-A- 3 145 907
- DE-C- 2 637 432
- US-A- 3 622 735

## Beschreibung

Die Erfindung bezieht sich auf eine Drahtelektrode zum funkenerosiven Schneiden von nicht oder schlecht leitenden Werkstücken sowie auf ein Verfahren zum Herstellen der Drahtelektrode.

Beim funkenerosiven Schneiden von leitenden Materialien wird der Effekt ausgenutzt, daß zwischen der Elektrode und dem zu schneidenden Material ein Spannungspotential vorhanden ist, welches zu Funkenüberschlägen führt, welche zum betrag des zu schneidenden Materialbereiches verwendet werden. Derartige Verfahren sind aus dem Stand der Technik bekannt.

Da nach den üblichen Prinzipien des funkenerosiven Schneidens das Anlegen eines Potentials an das Werkstück erforderlich ist, ergeben sich, bedingt durch das zugrundeliegende Prinzip, Probleme bei Werkstücken, welche nicht elektrisch leitend sind.

Die DE-PS 26 37 432 beschreibt ein Verfahren und eine Vorrichtung zum Zertrennen von nichtleitenden oder schlechtleitenden Werkstücken, beispielsweise Diamanten. Es werden hierbei zwei zueinander parallel geführte Drahtelektroden verwendet, welche plattenförmig aufgebaut sind und deren Abstand so gewählt ist, daß ein Funkenüberschlag zwischen den beiden Elektroden erfolgt. Die Funkenstrecke wird dabei so angeordnet, daß das zu schneidende, nicht- oder schlecht- leitende Material erodiert wird. Diese Vorgehensweise weist den entscheidenden Nachteil auf, daß eine sehr exakte Führung der beiden Elektroden erforderlich ist. Dies ist insbesondere im Hinblick auf die Tatsache, daß die Elektroden als Drahtelektroden ausgebildet sind und ständig nachgeführt werden müssen, besonders ungünstig. Ein weiterer Nachteil dieser Vorgehensweise liegt darin, daß die zur Verfügung stehende Erosionsstrecke nur sehr kurz ist, da der Funkenüberschlag nur zwischen den beiden Drahtelektroden erfolgt. Sofern aus konstruktiven Gründen eine breitere Schnittbreite bzw. ein größerer Abstand der beiden Elektroden erforderlich ist, müssen sehr hohe Spannungen angelegt werden, um den gewünschten Effekt zu erzielen.

Eine andere, beispielsweise aus der DE-PS 24 04 857 bekannte Lösungsmöglichkeit für das zugrundeliegende Problem liegt darin, durch eine geeignete Aufbereitung der Elektrolytlösung einen oberflächenaktiven Stoff in der dielektrischen Lösung zu bilden, welcher zu einer gewissen Leitfähigkeit des jeweiligen Oberflächenbereiches führt und einen Funkenüberschlag von der Elektrode zu dem nicht- oder schlechtleitenden Werkstück bewirken soll. Diese Vorgehensweise erfordert einen erheblichen Aufwand bei der Zubereitung bzw. der Überwachung der Elektrolytlösung und ist somit für viele industrielle Einsatzzwecke nicht geeignet.

Der Erfindung liegt die Aufgabe zugrunde, eine Drahtelektrodenanordnung zum funkenerosiven Schneiden sowie ein Verfahren zur Herstellung der Drahtelektrode zu schaffen, welche bei einfachem Aufbau und einfacher Anwendbarkeit das funkenerosive Schneiden von nichtleitenden Materialien ermöglicht.

Hinsichtlich der Drahtelektrode wird die Aufgabe dadurch gelöst, daß diese aus wenigstens einem ersten und einem zweiten, sich im wesentlichen parallel zueinander erstrekkenden Leiterdraht besteht, wobei die Leiterdrähte miteinander verbunden und so gegeneinander isoliert sind, daß sie mit entgegengesetzten elektrischen Spannungen beaufschlagt werden können, so daß sie gemeinsam eine bipolare Werkzeugelektrode bilden.

Die erfindungsgemäße Anordnung zeichnet sich durch eine Reihe erheblicher Vorteile aus. Da erfindungsgemäß nur eine einzige Drahtelektrode verwendet wird, welche auf den beiden einzelnen Elektroden gebildet wird, kann auf aufwendige Führungseinrichtungen verzichtet werden, so daß die Drahtelektrode im wesentlichen auf bekannten und handelsüblichen Funkenerosionsmaschinen einsetzbar ist, die hierfür leicht umrüstbar sind. Weiterhin ergibt sich erfindungsgemäß der wesentliche Vorteil, daß der Abstand der beiden Einzelelektroden zueinander fest vorgegeben und nicht veränderbar ist, so daß während des Schneidvorganges stets gleiche Verhältnisse vorliegen. Dies ist insbesondere hinsichtlich der Schnittgeschwindigkeit sowie der angelegten elektrischen Potentiale von besonderer Wichtigkeit.

Weiterhin ist es erfindungsgemäß von Vorteil, daß die Drahtelektrode in beliebiger Weise ausgestaltet sein kann, so daß eine exakte Anpassung an die jeweiligen Schneidbedingungen, beispielsweise die Schnittgeschwindigkeit und die Schnittbreite möglich ist.

Die erfindungsgemäße Elektrodenanordnung ergibt somit die Möglichkeit, ohne daß ein Kurzschluß zwischen den beiden Elektroden auftreten kann, einen Funkenüberschlag zwischen den beiden Elektroden zu erzeugen, mit Hilfe dessen das sich im Schnittbereich befindliche nicht- oder schlechtleitende Material geschnitten werden kann.

In einer günstigen Weiterbildung der Erfindung ist vorgesehen, daß die Drahtelektrode gewendelt ausgebildet ist. Die Wendelung der Drahtelektrode ergibt den Vorteil, daß Partikel aus dem Schneidspalt gefördert werden, so daß im Bereich des Schnittvorganges stets nicht-verunreinigtes Dielektrikum nachströmen kann. Dies führt insbesondere bei sehr schmalen Bearbeitungsspalten zu einer erheblichen Erhöhung der Schnittgeschwindigkeit und der Qualität des Schnittes. Ein weiterer Vorteil der Wendelung liegt darin, daß bei einer Längsbewegung der Elektrode der Funkenüberschlagbereich seine Positionierung ändert und, bezogen auf das nicht in Bewegung befindliche Werkstück, im Schnittspalt gedreht wird. Dadurch wird erfindungsgemäß sichergestellt, daß der Schnitt in gleichmäßiger Weise über den gesamten Schneidspalt erfolgt. Auch durch diese Maßnahme läßt sich eine wesentliche Steigerung der Schnittgüte erzielen.

Um eine gezielte und den Anforderungen gerecht werdende Aufbringung des elektrischen Potentials zu ermöglichen, ist erfindungsgemäß vorgesehen, daß die Drahtelektrode über zumindest zwei gegeneinander isolierte Schleifkontakte in elektrischer Verbindung mit der Spannungsquelle der Funkenerosionsmaschine steht. Die Schleifkontakte sind dabei so angeordnet, daß jeweils ein Schleifkontakt mit der oder den jeweiligen, mit gleichem Potential beaufschlagten Elektroden in Kontakt ist. Bei einer nicht gewendelten Drahtelektrode kann die Zuordnung des Schleifkontaktes zu der Elektrode durch eine entsprechende Ausrichtung und Positionierung der Elektrode erfolgen, während bei einer gewendelten Elektrode eine drehbare Lagerung des Schleifkontaktes bevorzugt sein kann, um in erfindungsgemäßer Weise an den einen Schleifkontakt ein Pluspotential und an den anderen Schleifkontakt ein Minuspotential anzulegen.

Das erfindungsgemäße Lösungsprinzip ermöglicht vielfältige Ausgestaltungsvarianten der Drahtelektroden. In einer ersten Ausführungsmöglichkeit ist vorgesehen, daß die erste Elektrode zentrisch angeordnet ist und zumindest eine Seitenfläche aufweist, an welcher die zweite Elektrode angeordnet ist. Dabei kann die erste Elektrode mit einem Pluspotential beaufschlagt sein, während an die zweite Elektrode das Minuspotential angelegt ist. Die Ausgestaltung der Drahtelektrode kann dabei so sein, daß die erste, zentrische Elektrode nicht mit einer Isolierung versehen ist, während die eine oder die mehreren zweiten Elektroden gegenüber der ersten Elektrode isoliert sind. Die Isolierung der zweiten Elektrode ist dabei so gewählt, daß ein direkter Kurzschluß zwischen den beiden Elektroden vermieden wird und daß die Funkenstrecke durch das Dielektrikum so ausgebildet ist, daß ein Abtrag der nicht- oder schlechtleitenden Materialien erfolgt.

Alternativ zu dem oben geschilderten Ausführungsbeispiel kann es auch besonders günstig sein, wenn die Drahtelektrode einen zentrischen Isolator umfaßt, an dessen Außenflächen jeweils die erste und die zweite Elektrode angeordnet sind. Der zentrische Isolator kann beispielsweise dadurch gebildet werden, daß zwei mit einer Isolierung versehene Elektrodendrähte miteinander verbunden werden. Es ist jedoch auch möglich, nur einen der Elektrodendrähte zu isolieren, während der andere Elektrodendraht als blanker Draht ausgebildet ist. Es ist dann erforderlich, die beiden Drähte in geeigneter Weise miteinander zu verbinden, beispielsweise zu verkleben.

Um insbesondere bei einer gewendelten Drahtelektrode einen sicheren Eingriff der Schleifkontakte mit den jeweiligen Elektrodenbereichen sicherzustellen, ist erfindungsgemäß vorgesehen, daß die jeweiligen Drahtelektroden zum formschlüssigen Eingriff mit dem Schleifkontakt profiliert sind. Die Elektroden können beispielsweise einen prismatischen Querschnitt aufweisen, es ist jedoch auch möglich, diese halbkreisförmig auszugestalten und mit einer Längsnut zu versehen, in welche der Schleifkontakt eingreift. Die Ausgestaltung der Querschnitte der Drahtelektroden kann dabei so gewählt werden, daß die entsprechende Wendelung berücksichtigt werden kann und daß insbesondere eine drehförmige Bewegung der Schleifkontakte sichergestellt ist. Die Profilierung der Drahtelektrode kann dabei den auf dem Schleifkontakt zu übertragenden Kräften angepaßt werden, so daß möglicherweise kein eigener Antrieb zur Drehung des Schleifkontaktes bei Verwendung einer gewendelten Drahtelektrode erforderlich ist. In gleicher Weise kann die Profilierung bei einer nicht gewendelten Drahtelektrode vorteilhaft sein.

Hinsichtlich des Verfahrens erfolgt die Lösung der zugrundeliegenden Aufgabe dadurch, daß in einer ersten Ausführungsform ein die erste Elektrode bildender nicht isolierter Draht profiliert wird, daß beim Wendelvorgang des profilierten Drahts die zweite Elektrode in Form eines isolierten Drahts in den Wendel eingeführt wird und daß Bereiche der Isolierschicht der zweiten Elektrode in einem nachfolgenden Durchlauf durch eine Schabedüse entfernt werden. So ist es beispielsweise möglich, das isolierte Drahtmaterial in Form eines Lackdrahtes aus Kupfer, Ne-Metall-Legierungen, Eisen und Stahl oder sonstigem leitfähigem Material einzusetzen. Die Profilierung des Elektrodendrahtes erfolgt beispielsweise durch Walzen oder Ziehen. Es ist aber auch möglich, in umgekehrter Weise einen eine erste Elektrode bildenden Lackdraht durch Walzen oder Ziehen zu profilieren, wobei unter Verwendung bekannter Verfahren die Lackschicht nicht beschädigt wird. Bei dem Wendelvorgang werden in Abhängigkeit von der gewünschten Ausgestaltung der Elektrode ein oder zwei zusätzliche blanke nichtisolierte Drähte mit in den Wendel eingeführt. Mittels der nachgeschalteten Schabedüse wird die Lackschicht an der äußeren Kontakt- bzw. Funkenentladungsfläche der ersten Elektrode wieder entfernt, so daß ein Funkenübergang zwischen den einzelnen. Elektroden ermöglicht wird. Es versteht sich von selbst, daß die Anzahl der einzelnen Drahtelektroden sowohl bei diesem Ausführungsbeispiel als auch bei den anderen Ausführungsbeispielen beliebig gewählt werden kann, um die gewünschten Funkenstrecken zu erzeugen.

In einer weiteren, bevorzugten Verfahrensausgestaltung ist vorgesehen, daß mehrere Drähte, von denen zumindest einer isoliert ist, durch einen Wendelgang geleitet werden und daß mittels einer nachgeschalteten Schabedüse an dem äußeren Bereich der Drahtelektroden die Isolierschicht entfernt wird. Bei dieser Vorgehensweise wird ein zentrischer Isolator gebildet, welcher aus den beiden gegeneinander angelegten Isolierschichten der einzelnen isolierten Drähte besteht. Dabei ist es möglich, in besonders wirtschaftlicher Weise Lackdrähte aus normalem Kupferdraht oder entsprechendem Draht zu verwenden. Durch die Ausgestaltung der nachgeordneten Schabedüse ist es möglich, gezielt an bestimmten Umfangsbereichen der Drahtelektrode die Isolierung oder Lackschicht zu entfernen, um die gewünschten Entladungszonen zu schaffen. Um den Eingriff mit der entsprechenden Schleifelektrode zu verbessern und um die Drahtelektrode sicher zu führen, kann es günstig sein, daß die Drähte vor oder nach dem Wendeln profiliert werden. So ist es beispielsweise möglich, Segmentdrähte oder Halbrunddrähte zu verwenden bzw. den Draht mit einem prismatischen Querschnitt zu versehen.

Alternativ zu der letztbeschriebenen Vorgehensweise ist es auch möglich, die Drähte als Halbrunddrähte auszubilden, wobei mindestens einer der Drähte isoliert bzw. belackt ist. Dabei ist es möglicherweise günstig, die beiden Drähte miteinander zu verkleben, beispielsweise in einem BacklackVerfahren unter gleichzeitiger Erwärmung der Drähte.

In einer Verfahrensvariante kann es günstig sein, wenn ein isolierter Draht gewendelt wird und nachfolgend in die Wendelung ein weiches Material mit niedrigem Schmelzpunkt eingebracht wird. Auch hierbei kann durch eine nachfolgende Schabedüse eine Abisolierung der jeweiligen Außenfläche der Drahtelektrode erfolgen. Der isolierte Draht kann beispielsweise ein Profildraht mit temperaturfestem Lack, Kunststoff, Teflon oder nichtleitendem Aluminiumoxyd sein. Das in den Wendel eingebrachte Metall kann beispielsweise aus Blei, Zinn, Zink oder entsprechenden Legierungen bestehen oder durch ein geeignetes Auftragsverfahren, wie beispielsweise Feuerverzinnen und Verzinken o.ä. erzeugt werden.

Erfindungsgemäß ist somit die Möglichkeit geschaffen, nichtleitende Werkstoffe, insbesondere Keramik zu erodieren. Es versteht sich für den Fachmann von selbst, daß die erfindungsgemäße Drahtelektrode aus zwei oder mehreren einzelnen drahtförmigen Elektroden aufgebaut sein kann. Weiterhin ist es möglich, die Drahtelektrode als Durchlaufelektrode oder als Senkelektrode auszugestalten.

Im folgenden wird die Erfindung anhand von Ausführungsbeispielen in Verbindung mit der Zeichnung beschrieben.

Dabei zeigt:
Fig. 1 eine schematische Darstellung der funkenerosiven Schnittanordnung,
Fig. 2 eine schematische, perspektivische Ansicht eines ersten Ausführungsbeispiels der erfindungsgemäßen Anordnung,
Fig. 3 eine vergrößerte Darstellung der bei der Anordnung gemäß Fig. 2 verwendeten Schleifkontakte,
Fig. 4 eine Schnittansicht durch ein Ausführungsbeispiel der erfindungsgemäßen Drahtelektrode mit einer zentrischen Elektrode,
Fig. 5 eine Schnittansicht durch ein Ausführungsbeispiel der erfindungsgemäßen Drahtelektrode unter Darstellung der Schleifkontakte, mit einem zentrischen Isolierkörper,
Fig. 6 eine Schnittansicht einer weiteren Ausgestaltungsvariante der erfindungsgemäßen Drahtelektrode.

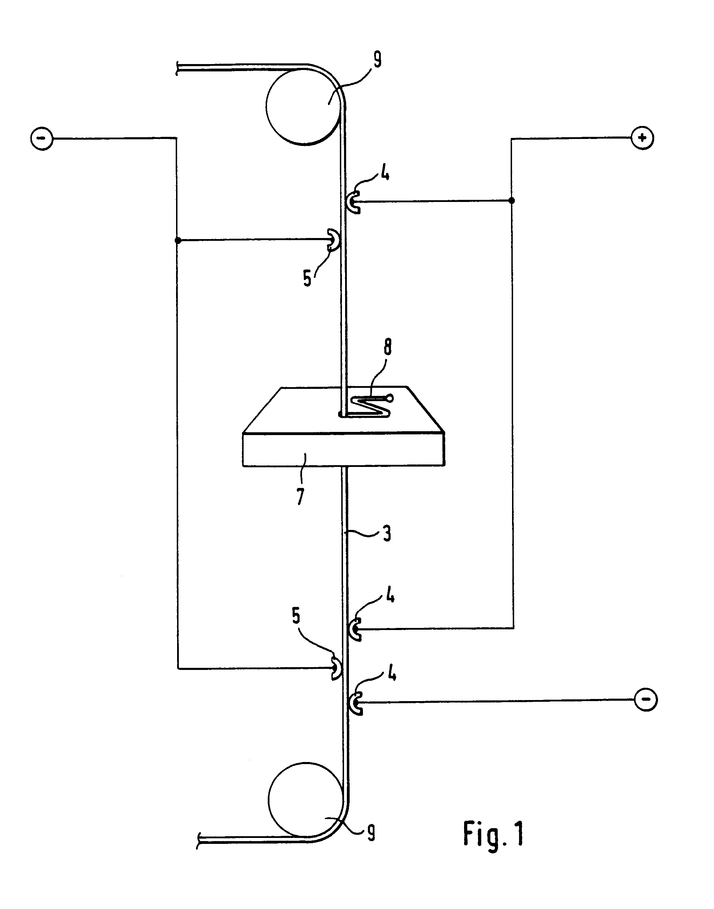

In Fig. 1 ist eine schematische Darstellung der erfindungsgemäßen Funkenerosionsanordnung gezeigt. Diese umfaßt ein Werkstück 7 aus einem nichtleitenden Material, in welches eine Schnittfuge 8 eingebracht wird. Die gesamte Anordnung ist in üblicher Weise zumindest im Funkenerosionsbereich in einem Dielektrikum angeordnet, so wie dies aus dem Stand der Technik bekannt ist. Durch das Werkstück 7 wird eine Drahtelektrode 3 geführt, welche in nicht dargestellter Weise von einer Vorratsspule auf eine Aufwickelspule geführt wird. In der Fig. 1 sind von der gesamten Drahtführung lediglich Umlenkrollen 9 gezeigt.

Bei der Anordnung gemäß Fig. 1 sind vor bzw. nach dem Werkstück 7 Schleifkontakte 4,5 vorgesehen, mittels derer die nachfolgend noch zu beschreibende Drahtelektrode 3 an ein Pluspotential bzw. ein Minuspotential anzuschließen ist. Die Schleifkontakte 4 dienen zum Anschluß an das Pluspotential, während die Schleifkontakte 5 der Verbindung mit dem Minuspotential dienen.

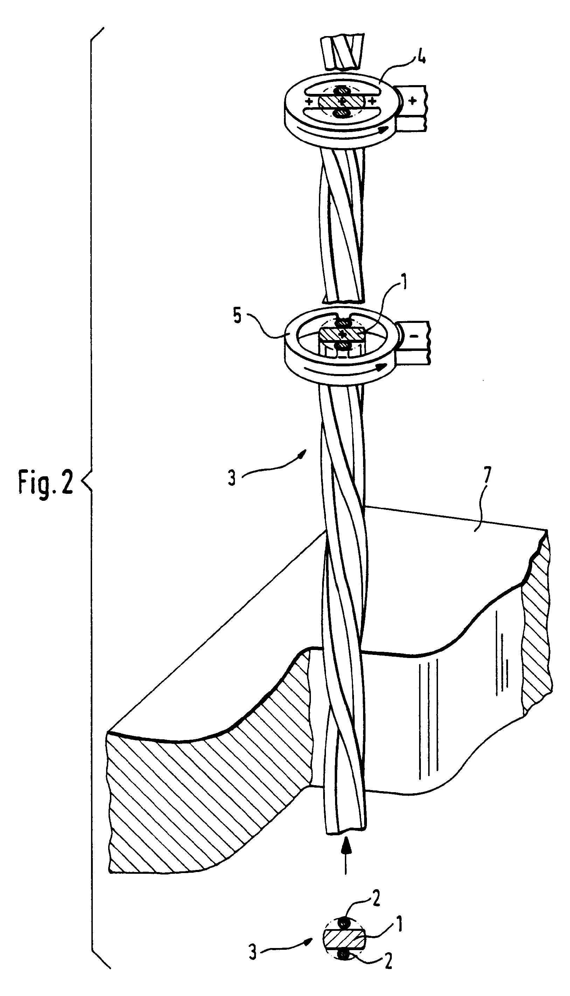

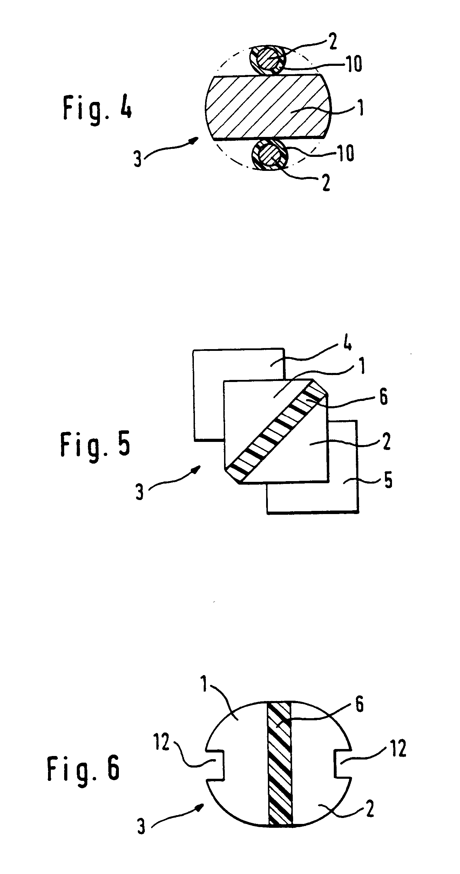

Die Fig. 2 zeigt eine vergrößerte perspektivische Darstellung eines Werkstücks 7, teils im Schnitt, welches mittels der Drahtelektrode 3 geschnitten ist. Im unteren Bildbereich der Fig. 2 ist ein Schnitt durch das gezeigte Ausführungsbeispiel der Drahtelektrode 3 dargestellt. Der Aufbau der Drahtelektrode wird nachfolgend anhand der Fig. 4 im einzelnen erläutert werden. Die Drahtelektrode umfaßt eine erste Elektrode 1, welche zentrisch angeordnet ist. An ihren beiden Flanken sind jeweils zweite Elektroden 2 vorgesehen, welche mittels einer Isolierschicht 10 gegenüber der ersten Elektrode 1 isoliert sind. Die gesamte Drahtelektrode 3 ist mit einem im wesentlichen kreisförmigen Querschnitt versehen und so ausgebildet, daß die Isolierschicht 10 der zweiten Elektrode 2 am äußeren Umfangsbereich entfernt ist. Dadurch kann eine Funkenstrecke von der zweiten Elektrode 2 zu der blanken, nicht isolierten ersten Elektrode 1 entstehen.

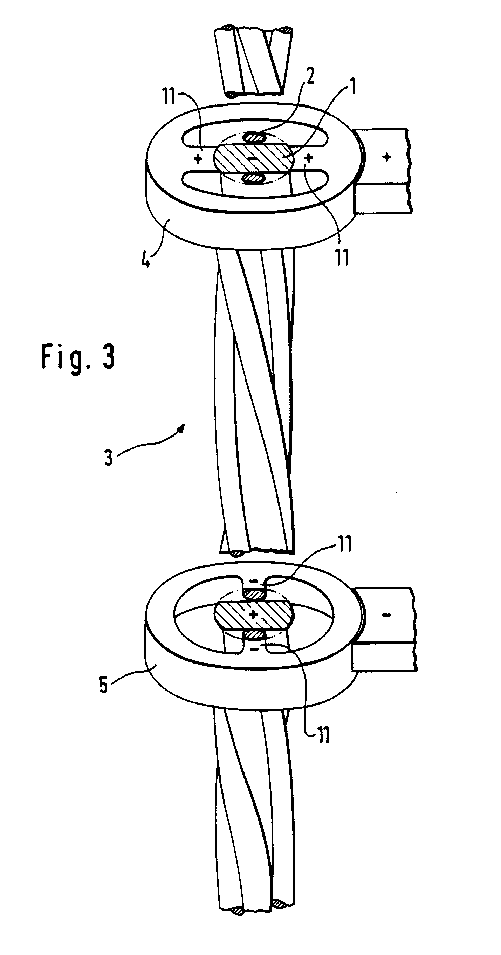

Die Fig. 3 zeigt den Aufbau und die Anordnung der Drahtelektrode 3 in vergrößerter Darstellung.

Es besteht erfindungsgemäß die Möglichkeit, für die erste und die zweite Elektrode jeweils unterschiedliche Materialien zu verwenden, welche hinsichtlich ihrer elektrischen Eigenschaften, ihrer Verschleißbeständigkeit und sonstiger Werte in optimaler Weise den Anforderungen angepaßt werden können.

Zur Übertragung des elektrischen Potentials ist bei dem in den Fig. 2 - 4 gezeigten Ausführungsbeispiel der Drahtelektrode jeweils ein ringförmiger Schleifkontakt 4,5 vorgesehen, welcher die Drahtelektrode 3 umschließt und einander gegenüberliegende, nach innen weisende Schenkel 11 aufweist, die an die Profilierung der Drahtelektrode 3 angepaßt sind und so bemessen sind, daß sie sich in Eingriff mit der ersten bzw. der zweiten Elektrode 1,2 befinden. Der in Fig. 3 oben dargestellte Schleifkontakt 4 dient zur Anlegung eines Pluspotentials, während der untere Schleifkontakt 5 ein Minuspotential aufbringt. Wie durch die Pfeile in Fig. 2 angedeutet, befinden sich die Schleifkontakte 4,5 in Drehung, um bei einer Längsbewegung der gewendelten Drahtelektrode 3 eine Kontaktierung zu der jeweiligen Elektrode 1 oder 2 beizubehalten. Zur Anpassung der Drehbewegung des Schleifkontaktes 4,5 ist es möglich, die jeweilige Elektrode bzw. den Schleifkontakt zu profilieren, um eine Kraftübertragung sicherzustellen, so wie dies in den Ausführungsbeispielen der Fig. 5 und 6 gezeigt ist.

Die Fig. 5 und 6 zeigen jeweils Ausführungsbeispiele der erfindungsgemäßen Drahtelektrode, bei welchen ein zentrischer Isolator 6 vorgesehen ist, welcher die erste Elektrode 1 elektrisch von der zweiten Elektrode 2 isoliert. Die beiden Elektroden 1,2 sind jeweils profiliert ausgebildet, wobei die Elektrode des in Fig. 5 gezeigten Ausführungsbeispiels einen prismatischen oder dreieckigen Querschnitt aufweist, während die Elektrode 1,2 gemäß dem Ausführungsbeispiel der Fig. 6 mit einem halbkreisförmigen Querschnitt versehen ist, in dessen Scheitel eine Nut 12 eingebracht ist. Die Nut 12 dient zum formschlüssigen Eingriff mit einem entsprechend profilierten Schleifkontakt (nicht dargestellt). Bei dem Ausführungsbeispiel gemäß Fig. 5 ist eine Schnittdarstellung der Schleifkontakte 4,5 gezeigt, diese sind winkelförmig ausgebildet und umschließen die Außenfläche der Elektrode 1 bzw. 2. Es versteht sich, daß die in Fig. 5 gezeigten Schleifkontakte 4,5 nur einen Teil der ringförmigen Ausgestaltung, so wie sie in Fig. 3 gezeigt ist, bilden.

## Patentansprüche

1. Drahtelektrode (3) zum funkenerosiven Schneiden von nicht oder schlecht leitenden Werkstücken, die aus wenigstens einem ersten und einem zweiten, sich im wesentlichen parallel zueinander erstreckenden Leiterdraht (1, 2) besteht, wobei die Leiterdrähte (1, 2) fest miteinander verbunden und so gegeneinander isoliert sind, daß sie mit entgegengesetzten elektrischen Spannungen beaufschlagt werden können, so daß sie gemeinsam eine bipolare Werkzeugelektrode (3) bilden.

2. Drahtelektrode nach Anspruch 1, dadurch gekennzeichnet, daß die Drahtelektrode (3) gewendelt ausgebildet ist.

3. Drahtelektrode nach einem der Ansprüche 1 oder 2, dadurch gekennzeichnet, daß die erste Elektrode (1) zentrisch angeordnet ist und Seitenflächen aufweist, an welchen jeweils eine der zweiten Elektroden (2) angeordnet ist.

4. Drahtelektrode nach einem der Ansprüche 1 oder 2, dadurch gekennzeichnet, daß die Drahtelektrode (3) einen zentrischen Isolator (6) umfaßt, an dessen Außenflächen jeweils die erste und die zweite Elektrode (1, 2) angeordnet sind.

5. Drahtelektrode nach Anspruch 4, dadurch gekennzeichnet, daß die erste und die zweite Elektrode (1,2) einen prismatischen Querschnitt aufweisen.

6. Drahtelektrode nach Anspruch 4, dadurch gekennzeichnet, daß die erste und die zweite Elektrode (1,2) einen halbkreisförmigen Querschnitt aufweisen.

7. Drahtelektrode nach Anspruch 5 oder 6, dadurch gekennzeichnet, daß die erste und die zweite Elektrode (1,2) zum formschlüssigen Eingriff mit einem Schleifkontakt profiliert sind.

8. Verfahren zur Herstellung einer Drahtelektrode nach einem der Ansprüche 1 - 3, wobei ein die erste Elektrode (1) bildender nicht isolierter Draht profiliert wird, dadurch gekennzeichnet, daß beim Wendelvorgang des profilierten Drahts die zweite Elektrode (2) in Form eines isolierten Drahts in den Wendel eingeführt wird und daß Bereiche der Isolierschicht der zweiten Elektrode (2) in einem nachfolgenden Durchlauf durch eine Schabedüse entfernt werden.

9. Verfahren zur Herstellung einer Drahtelektrode nach einem der Ansprüche 1 - 2 und 4 - 7, dadurch gekennzeichnet, daß mehrere Drähte, von denen zumindest einer isoliert ist, durch einen Wendelgang geleitet werden, und daß mittels einer nachgeschalteten Schabedüse an dem äußeren Bereich der Drahtelektrode die Isolierschicht entfernt wird.

10. Verfahren nach Anspruch 9 dadurch gekennzeichnet, daß die Drähte vor oder nach dem Wendeln profiliert werden.

11. Verfahren nach Anspruch 9, dadurch gekennzeichnet, daß die Drähte als Halbrunddrähte ausgebildet werden.

12. Verfahren nach einem der Ansprüche 9 - 11, dadurch gekennzeichnet, daß die Drähte miteinander verklebt werden.

13. Verfahren zur Herstellung einer Drahtelektrode nach einem der Ansprüche 1 - 2, dadurch gekennzeichnet, daß ein isolierter Draht gewendelt wird, daß in den Wendel ein zweiter Draht aus einem weichen Material mit niedrigem Schmelzpunkt eingebracht wird und daß nachfolgend mittels einer Schadebüse Außenflächenbereiche der Drahtelektrode abisoliert werden.

## Claims

1. A wire electrode (3) for the spark-erosive cutting of non-conductive or poor-conductivity workpieces, which electrode comprises at least one first and one second conductor wire (1, 2) extending substantially parallel to each other, the conductor wires (1, 2) being firmly joined together and insulated from each other in such a way that they can be subjected to the impact of opposed electric voltages, so they form together a bipolar tool electrode (3).

2. A wire electrode according to Claim 1, characterised in that the wire electrode (3) has a coiled structure.

3. A wire electrode according to either of Claims 1 and 2, characterised in that the first electrode (1) is centrically arranged and has side faces, on each of which is arranged one of the second electrodes (2).

4. A wire electrode according to either of Claims 1 and 2, characterised in that the wire electrode (3) surrounds a centric insulator (6), on each of the outer faces of which are arranged the first and the second electrode (1, 2) respectively.

5. A wire electrode according to Claim 4, characterised in that the first and the second electrode (1, 2) have a prismatic cross-section.

6. A wire electrode according to Claim 4, characterised in that the first and the second electrode (1, 2) have a semicircular cross-section.

7. A wire electrode according to Claim 5 or 6, characterised in that the first and the second electrode (1, 2) are profiled for positive-locking engagement with a sliding contact.

8. A method for manufacturing a wire electrode according to any one of Claims 1 - 3, during which a non-insulated wire forming the first electrode (1) is profiled, characterised in that, during the coiling of the profiled wire, the second electrode (2) in the form of an insulated wire is inserted into the coil, and in that regions of the insulating layer of the second electrode (2) are removed by a scraper nozzle in a subsequent pass.

9. A method for manufacturing a wire electrode according to any one of Claims 1 - 2 and 4 - 7, characterised in that several wires, at least one of which is insulated, are led through a coiling process, and in that the insulating layer is removed on the outer region of the wire electrode by means of a scraper nozzle connected downstream.

10. A method according to Claim 9, characterised in that the wires are profiled before or after the coiling.

11. A method according to Claim 9, characterised in that the wires are half-round wires.

12. A method according to any one of Claim 9 - 11, characterised in that the wires are glued together.

13. A method for manufacturing a wire electrode according to one of Claims 1 - 2, characterised in that an insulated wire is coiled; in that a second wire made of a soft material with a low melting-point is inserted into the coil, and in that outer face regions of the wire electrode are subsequently stripped by means of a scraper nozzle.

## Revendications

1. Fil-électrode (3) par le découpage électro-érosion de pièces à usiner non conductrices ou non conductrices, qui est constitué par au moins un premier et un second fils conducteurs (1, 2) qui sont sensiblement parallèles, les fils conducteurs (1, 2) étant raccordés rigidement entre eux et isolés l'un par rapport à l'autre de telle façon qu'ils peuvent être portés à des tensions électriques opposées afin de former ensemble une électrode de travail bipolaire (3).

2. Fil-électrode selon la revendication 1, caractérisé en ce qu'il est agencé avec une forme hélicoïdale.

3. Fil-électrode selon l'une des revendications 1 ou 2, caractérisé en ce que la première électrode (1) est centrée et possède des surfaces latérales, sur chacune desquelles est disposées l'une des secondes électrodes (2).

4. Fil-électrode selon l'une des revendications 1 ou 2, caractérisé en ce qu'il comporte un isolateur centré (6), sur les surfaces extérieures duquel sont disposées respectivement les première et seconde électrodes (1, 2).

5. Fil-électrode selon la revendication 4, caractérisé en ce que les première et seconde électrodes (1, 2) ont une section transversale prismatique.

6. Fil-électrode selon la revendication 4, caractérisé en ce que les première et seconde électrodes (1, 2) ont une section transversale semi-circulaire.

7. Fil-électrode selon la revendication 5 ou 6, caractérisé en ce que les première et seconde électrodes (1, 2) sont profilées de manière à réaliser un engrènement à complémentarité de formes avec un contact glissant.

8. Procédé pour fabriquer un fil-électrode selon l'une des revendications 1 à 3, selon lequel on profile un fil non isolé constituant la première électrode (1), caractérisé en ce que, lors d'une opération d'enroulement en hélice du fil profilé, on introduit la seconde électrode ( 2 ) dans l'hélice sous la forme d'un fil isolé et qu'on élimine des zones de la couche isolante de la seconde électrode (2) lors d'un passage ultérieur dans une buse à racle.

9. Procédé pour fabriquer un fil-électrode selon l'une des revendications 1 à 2 et 4 à 7, caractérisé en ce qu'on dispose plusieurs fils, dont l'un au moins est isolé, sous la forme d'une hélice et qu'à l'aide d'une buse à racle installée en aval, on élimine la couche isolante sur la zone extérieure du fil-électrode.

10. Procédé selon la revendication 9, caractérisé en ce qu'on profile les fils avant ou après l'enroulement en hélice.

11. Procédé selon la revendication 9, caractérisé en ce que les fils sont constitués sous la forme de fils semi-circulaires.

12. Procédé selon l'une des revendications 9 à 11, caractérisé en ce qu'on colle les fils entre eux.

13. Procédé pour fabriquer un fil-électrode selon l'une des revendications 1 et 2, caractérisé en ce qu'on enroule en hélice un fil isolé, qu'on insère un second fil réalisé en un matériau mou possédant un bas point de fusion, à l'intérieur de l'hélice et qu'ensuite, on supprime l'isolant sur des zones superficielles extérieures du fil-électrode, à l'aide d'une buse à racle.
